# EUROPÄISCHE PATENTSCHRIFT

(11) **EP 3 162 590 B1**
(45) Veröffentlichungstag und Bekanntmachung des Hinweises auf die Patenterteilung: **27.01.2021**
(21) Anmeldenummer: 16194779.1
(22) Anmeldetag: 20.10.2016
(51) Int. Cl.: B60B 11/02

(54) **VORRICHTUNG ZUM LÖSBAREN VERBINDEN EINER ZUSATZRADFELGE MIT EINER FAHRZEUGRADFELGE**
DEVICE FOR THE DETACHABLE CONNECTION OF AN ADDITIONAL WHEEL RIM WITH A VEHICLE WHEEL RIM
DISPOSITIF DE LIAISON AMOVIBLE D'UNE JANTE SUPPLÉMENTAIRE AVEC UNE JANTE DE VÉHICULE

(30) Priorität: 26.10.2015 DE 102015118196
(43) Veröffentlichungstag der Anmeldung: 03.05.2017
(73) Patentinhaber: Kock und Sohn Räder GmbH, 48496 Hopsten-Schale (DE)
(72) Erfinder: Kock, Manfred, 48496 Hopsten-Schale (DE)
(74) Vertreter: Linnemann, Winfried

(56) Entgegenhaltungen:
- DE-A1- 3 148 701
- DE-A1- 10 261 702
- DE-U1-202007 011 159
- US-A- 4 214 792
- US-A- 4 396 232

## Beschreibung

Vorrichtung zum lösbaren Verbinden einer Zusatzradfelge mit einer Fahrzeugradfelge.

Die vorliegende Erfindung betrifft eine Vorrichtung zum lösbaren Verbinden einer Zusatzradfelge mit einer Fahrzeugradfelge, insbesondere eines landwirtschaftlichen Fahrzeuges, wie Schlepper, wobei die Vorrichtung einen Distanzring und mehrere Spannstangen aufweist, wobei die beiden Felgen unter Zwischenlage des Distanzrings mittels der in Umfangsrichtung der Felgen verteilt angeordneten Spannstangen konzentrisch zueinander lösbar miteinander verbindbar sind, wobei die Spannstangen an ihrem fahrzeugradseitigen Ende jeweils mit einem an der Fahrzeugradfelge angeordneten Verbindungsmittel und an ihrem zusatzradseitigen Ende mit einem an der Zusatzradfelge oder an dem Distanzring angeordneten Haltemittel in lösbaren Eingriff bringbar sind, wobei jede Spannstange mittels je einer Spanneinrichtung zum Verbinden der Felgen unter Zugspannung setzbar und zum Trennen der Felgen entspannbar ist und wobei die Spannstangen jeweils in Form von zwei Spannstangenabschnitten mit gegenläufigen Gewindeenden und mit einem zwischen den Spannstangenabschnitten angeordneten verdrehbaren Spannschloss als Spanneinrichtung ausgebildet sind.

Eine Vorrichtung sowie eine Spannstange der vorstehend genannten Art sind aus der US 4 214 792 A bekannt. Als nachteilig wird bei diesem Stand der Technik angesehen, dass die Betätigung des Spannschlosses der Spannstangen für das Bedienungspersonal schwierig und mit Gefahren verbunden ist.

Aus der EP 1 529 656 A2 ist ein Doppelrad für ein Fahrzeug, insbesondere für ein landwirtschaftliches Fahrzeug, bekannt, wobei das Doppelrad ein Fahrzeugrad mit einer Fahrzeugradfelge, ein Zusatzrad mit einer Zusatzradfelge und eine die beiden Felgen unter Zwischenlage eines Distanzrings lösbar miteinander verbindende Spannvorrichtung umfasst. Die Spannvorrichtung weist mehrere in Umfangsrichtung der Felgen verteilt angeordnete Spannstangen auf, die an ihrem fahrzeugradseitigen Ende mit an der Fahrzeugradfelge angeordneten Verbindungsmitteln und an ihrem zusatzradseitigen Ende mit einem an der Zusatzradfelge oder an dem Distanzring angebrachten Haltemittel in Eingriff bringbar sind. Jede Spannstange ist mittels je eines Hebelverschlusses am zusatzradseitigen Ende der Spannstange unter Zugspannung setzbar oder entspannbar. Dabei ist der Hebelverschluss als Kniehebelverschluss mit einem ersten und einem zweiten Hebel ausgeführt und der Kniehebelverschluss ist in seiner Spannstellung durch eine Übertotpunktstellung der beiden Hebel relativ zueinander lagegesichert.

Dieser Hebelverschluss hat sich in praktischen Einsatz bewährt, jedoch hat es sich als nachteilig herausgestellt, dass zum einen der Verstellweg der Spannstangen in deren Längsrichtung begrenzt ist und dass zum anderen für das Verschwenken der Hebel der Spannstangen erhebliche Kräfte manuell aufgebracht werden müssen, um einen sicheren Zusammenhalt von Fahrzeugradfelge und Zusatzradfelge zu gewährleisten.

Für die vorliegende Erfindung stellt sich daher die Aufgabe, eine Vorrichtung der eingangs genannten Art zu schaffen, die die genannten Nachteile vermeidet und die insbesondere die Betätigung des Spannschlosses der Spannstangen vereinfacht und für das Bedienungspersonal sicherer und komfortabler macht.

Die Lösung dieser Aufgabe gelingt erfindungsgemäß mit einer Vorrichtung der eingangs genannten Art, die dadurch gekennzeichnet ist, dass jedes Spannschloss mit einer handbetätigbaren Ratsche zum Verdrehen des Spannschlosses ausgeführt ist.

Durch diese handbetätigbare Ratsche wird die Betätigung des Spannschlosses der Spannstangen vereinfacht und für das Bedienungspersonal sicherer und komfortabler. Zugleich wird dadurch, dass für das Spannen und Entspannen, das heißt für das axiale Verkürzen und Verlängern, der Spannstangen nun pro Spannstange ein Spannschloss vorgesehen ist, erreicht, dass die axiale Länge der Spannstangen über einen großen Bereich einstellbar ist, so dass einheitliche Spannstangen für unterschiedliche Vorrichtungen mit insbesondere unterschiedliche Abstände voneinander aufweisenden Felgen mit den daran vorgesehenen Haltemitteln für die Spannstangen einsetzbar sind. Dabei können die nötigen Spannkräfte mit einem geringen Kraftaufwand bei der Betätigung des Spannschlosses erzeugt werden.

Um den vorgenannten Vorteil sowohl beim Spannen als auch beim Entspannen der Spannstangen zu erreichen, ist bevorzugt vorgesehen, dass jede Ratsche in ihrer Arbeitsrichtung umschaltbar ist.

Eine weitere Maßnahme zur Erleichterung der Bedienung der Vorrichtung durch das Bedienungspersonal besteht erfindungsgemäß darin, dass vorzugsweise jede Ratsche einen zwischen einer zur zugehörigen Spannstange parallelen Ruhelage und einer von der zugehörigen Spannstange senkrecht nach außen weisenden Betätigungslage umsteckbaren oder verschwenkbaren Betätigungshebel aufweist. Mittels des Betätigungshebels, der zweckmäßig als ergonomischer Handgriff geformt ist, können von einer Bedienungsperson die notwendigen Drehmomente für das Spannen und Entspannen der Spannstangen sicher aufgebracht werden. Wenn der Betätigungshebel nicht benötigt wird, wird er in seine Ruhelage umgesteckt oder verschwenkt, in der er nicht störend in Erscheinung tritt.

Um die an der Fahrzeugradfelge angeordneten Verbindungsmittel möglichst einfach und dabei doch funktional zuverlässig zu gestalten, sind diese vorzugsweise durch pro Spannstange je einen Kopfbolzen gebildet und ist an dem diesem Kopfbolzen zugewandten Ende jeder Spannstange ein wenigstens einseitig offenes, mit einem Kopf des Kopfbolzens mittels einer Bewegung in Richtung quer zur Spannstangenlängsrichtung in und außer Eingriff bringbares Kopfstück angebracht oder angeformt, in dem der Kopf des Kopfbolzens aufnehmbar ist. Das Kopfstück der Spannstange und der Kopf des Kopfbolzens an der Fahrzeugradfelge sind so einfach in und außer Eingriff bringbar, wobei gleichzeitig axiale Zugkräfte, die für das Verbinden der Felgen miteinander aufgebracht werden müssen, zuverlässig übertragen werden können.

Damit die Übertragung axialer Zugkräfte auch bei nicht exakt parallel zur Längsmittelachse der Felgen verlaufenden Spannstangen zuverlässig und gefahrlos bleibt, wird vorgeschlagen, dass im gespannten Zustand jeder Spannstange aneinander anliegende Kontaktflächen von Kopfstück und Kopf des Kopfbolzens gegengleich kalottenförmig ausgebildet sind. Die Spannstangen können so jeweils innerhalb eines gewissen räumlichen Winkelbereichs von einem Verlauf parallel zur Längsmittelachse oder Drehachse der Felgen abweichen, ohne dass dabei die Kraftübertragung beeinträchtigt wird.

Zur Gewährleistung einer dauerhaft hohen Betriebssicherheit und Verschleißfestigkeit der Vorrichtung schlägt die Erfindung vor, dass das Kopfstück an jeder Spannstange ein Schmiedeteil aus Stahl ist.

Eine weitere vorteilhafte Weiterbildung der erfindungsgemäßen Vorrichtung sieht vor, dass das an der Zusatzradfelge angeordneten Haltemittel durch einen mit der Zusatzradfelge fest verbundenen oder einstückigen, konzentrisch umlaufenden Spannring gebildet ist und dass an dem diesem Spannring zugewandten Ende jeder Spannstange ein mit dem Spannring in und außer Eingriff bringbares hakenförmiges Endstück angeordnet ist. Ein derartiger Spannring als Haltemittel bietet insbesondere den Vorteil, dass die Spannstangen mit ihrem Endstück in Umfangsrichtung des Spannrings gesehen an jeder beliebigen Stelle mit dem Spannring in Eingriff bringbar sind. Eine spezielle Positionierung der Zusatzradfelge relativ zu der Fahrzeugradfelge in deren Umfangsrichtung ist vorteilhaft damit nicht erforderlich.

In einer alternativen Ausgestaltung der Vorrichtung ist vorgesehen, dass der Distanzring fest mit der Zusatzradfelge verbunden ist, dass das an dem Distanzring angeordneten Haltemittel durch einen mit dem Distanzring fest verbundenen oder einstückigen, konzentrisch umlaufenden Spannring gebildet ist und dass an dem diesem Spannring zugewandten Ende jeder Spannstange ein mit dem Spannring in und außer Eingriff bringbares hakenförmiges Endstück angeordnet ist. Auch in dieser Ausgestaltung der Vorrichtung sind die Spannstangen mit ihrem Endstück in Umfangsrichtung des Spannrings gesehen an jeder beliebigen Stelle mit dem Spannring in Eingriff bringbar und eine spezielle Positionierung der Zusatzradfelge relativ zu der Fahrzeugradfelge in deren Umfangsrichtung ist vorteilhaft auch hier nicht erforderlich.

Um einen sicheren vollflächigen Kontakt des hakenförmigen Endstücks mit dem Spannring auch dann zu gewährleisten, wenn die Spannstangen nicht exakt parallel zur Längsmittelachse oder Drehachse der Felgen verlaufen, sieht die Erfindung vor, dass das hakenförmige Endstück jeweils axial beweglich und begrenzt verschwenkbar auf die zugehörige Spannstange aufgesetzt ist, dass jede Spannstange an ihrem dem Endstück zugeordneten Ende einen Anschlag für das zugehörige Endstück aufweist und dass im gespannten Zustand jeder Spannstange aneinander anliegende Kontaktflächen von Endstück und Anschlag gegengleich kalottenförmig ausgebildet sind. Auf diese Weise wird auch im Bereich der Verbindung der Spannstangen mit dem Spannring ein sicherer Eingriff zwischen Endstück und Spannring und eine günstige flächige Anlage von Endstück und Anschlag innerhalb der Spannstange gewährleistet, was für eine sichere Zugkraftübertragung auch dann sorgt, wenn die Längsachsen der Spannstangen nicht exakt parallel zur Längsmittelachse oder Drehachse der Felgen verlaufen.

Damit die Vorrichtung auch im Hinblick auf das Endstück an jeder Spannstange über lange Zeit betriebssicher bleibt, ist bevorzugt das Endstück an jeder Spannstange ein Schmiedeteil aus Stahl.

Für einen guten, störungsfreien Lauf des mit Zwillingsrädern ausgestatteten Fahrzeuges ist eine jeweils exakt konzentrische Anordnung des Zusatzrades zum zugehörigen Fahrzeugrad wesentlich. Um diese Anforderung möglichst gut zu erfüllen, ist erfindungsgemäß vorgesehen, dass der Distanzring in seinem der Fahrzeugradfelge zugewandten Randbereich einen radial nach außen vorragenden Wulst mit einer solchen Formgebung und Bemaßung aufweist, dass der Wulst in eine nach radial innen hin offene, nutförmige Kontur am axial äußeren Rand der Fahrzeugradfelge zentrierend einrastbar ist. Vorteilhaft wird hier eine an der Fahrzeugradfelge vorhandene Kontur für das Positionieren und Zentrieren der Zusatzradfelge mithilfe des Distanzrings mit Wulst genutzt.

Eine Weiterbildung der erfindungsgemäßen Vorrichtung besteht darin, dass die Zusatzradfelge einen mit dem Außendurchmesser der Fahrzeugradfelge übereinstimmenden Außendurchmesser aufweist, dass der Distanzring fest mit der Zusatzradfelge verbunden ist und dass der Spannring unmittelbar mit dem Innenumfang der Zusatzradfelge oder dem Innenumfang des Distanzrings fest verbunden ist. In dieser Ausführung sind die Fahrzeugradfelgen und die Zusatzradfelgen zweckmäßig mit identischen Reifen bestückt, um die Masse des Fahrzeugs auf eine größere Fläche zu verteilen.

Eine dazu alternative Weiterbildung der erfindungsgemäßen Vorrichtung ist dadurch gekennzeichnet, dass die Zusatzradfelge einen den Außendurchmesser der Fahrzeugradfelge übersteigenden Außendurchmesser aufweist, dass der Spannring mittels eines in einer radialen Ebene liegenden Überbrückungsrings mit dem Innenumfang der Zusatzradfelge fest verbunden ist und dass der Distanzring fest mit dem Spannring und/oder dem Überbrückungsring verbunden ist. In dieser Ausführung sind die Fahrzeugradfelgen und die Zusatzradfelgen mit unterschiedlichen Bereifungen zu bestücken, wobei zweckmäßig die Reifen auf den Zusatzradfelgen Niederdruckreifen sind, die sich bei Belastung unter gewünschter Vergrößerung ihrer Aufstandsfläche so weit in ihrem Außendurchmesser verringern, dass die Durchmesser der Bereifungen von Fahrzeugrad und Zusatzrad im Einsatz gleich groß sind und sich eine besonders große, bodenschonende Gesamt-Aufstandsfläche aller Reifen insgesamt ergibt.

Im Folgenden werden Ausführungsbeispiele der Erfindung anhand einer Zeichnung erläutert. Die Figuren der Zeichnung zeigen:
- Figur 1: eine Vorrichtung, die mittels Spannstangen und eines Distanzrings eine Fahrzeugradfelge und eine gleich große Zusatzradfelge miteinander verbindet, in einer ersten Ausführung, im Vertikalschnitt,
- Figur 2: die eine Fahrzeugradfelge und eine im Durchmesser größere Zusatzradfelge miteinander verbindende Vorrichtung, in einer zweiten Ausführung, im Vertikalschnitt,
- Figur 3: eine Spannstange mit einer Ratsche als Teil der Vorrichtung aus Figur 1 und Figur 2, in Ansicht,
- Figur 4: die Ratsche aus Figur 3 in einem Schnitt entlang einer zur Spannstange radialen Ebene,
- Figur 5: die Spannstange aus Figur 3 in ihrer Lösestellung, im Längsschnitt,
- Figur 6: die Spannstange aus Figur 3 in ihrer Spannstellung, im Längsschnitt,
- Figur 7: einen Verbindungsbereich zwischen Spannstange und Distanzring, als vergrößertes Detail, im Vertikalschnitt, und
- Figur 8: einen Verbindungsbereich zwischen Spannstange und Fahrzeugradfelge, als vergrößertes Detail, im Vertikalschnitt.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

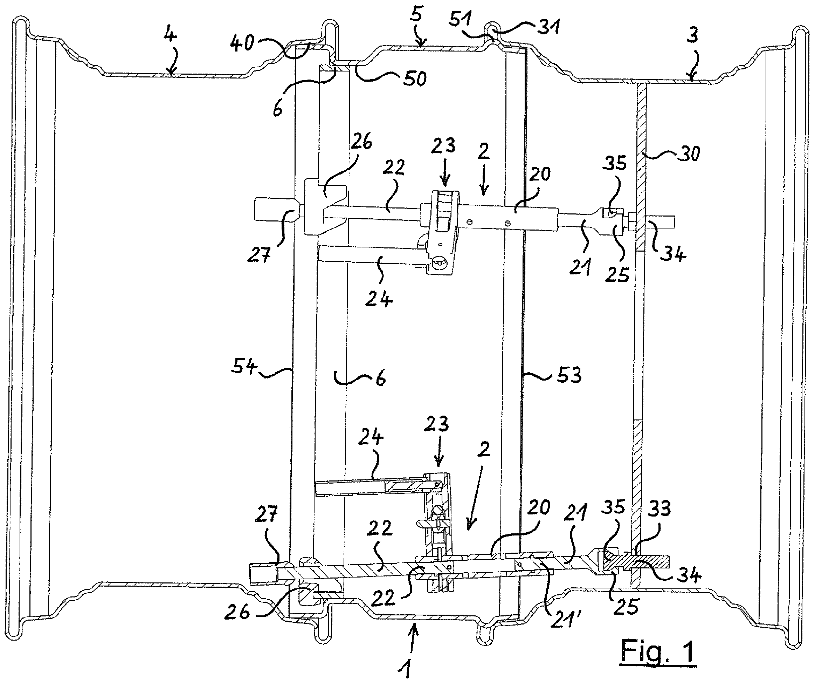

Figur 1 zeigt eine Vorrichtung 1, die mittels Spannstangen 2 und eines Distanzrings 5 eine Fahrzeugradfelge 3 und eine gleich große Zusatzradfelge 4 miteinander verbindet, in einer ersten Ausführung, im Vertikalschnitt. Die in Figur 1 rechts dargestellte Fahrzeugradfelge 3 gehört zu einem Fahrzeug, wie Schlepper, und ist mit diesem mittels einer zentral in der Fahrzeugradfelge 3 angeordneten Radscheibe 30 über hier nicht dargestellte Radschrauben oder Radmuttern in üblicher Art und Weise lösbar verbunden.

Die Zusatzradfelge 4 ist links in Figur 1 dargestellt und hat hier die gleichen Abmessungen wie die Fahrzeugradfelgen 3. Zwischen den einander zugewandten Stirnseiten der Felgen 3, 4 ist ein in seiner Grundform hohlzylindrischer Distanzring 5 angeordnet, der entsprechend seiner axialen Länge die beiden Felgen 3, 4 auf einem vorgegebenen axialen Abstand voneinander hält. Dabei greift der Distanzring 5 mit seiner fahrzeugradseitigen Stirnseite 53 in die Fahrzeugradfelgen 3 und mit seiner anderen, zusatzradseitigen Stirnseite 54 in die Zusatzradfelge 4 ein.

Nahe seiner fahrzeugradseitigen Stirnseite 53 besitzt der Distanzring 5 einen nach außen weisenden umlaufenden Wulst 51, mit dem der Distanzring 5 in seinem in Figur 1 gezeigten Einbauzustand in eine radial nach innen hin offene, nutförmige Kontur 31 der Fahrzeugradfelge 3 positionierend und zentrierend eingreift.

An seiner zusatzradseitigen Stirnseite 54 ist der Distanzring 5 bei dem Beispiel nach Figur 1 fest mit der Zusatzradfelge 4 verbunden, insbesondere verschweißt. Nahe der zusatzradseitigen Stirnseite 54 ist am Innenumfang 50 des Distanzrings 5 ein umlaufender Spannring 6 fest angebracht, ebenfalls vorzugsweise angeschweißt, der einen in Richtung zur zusatzradseitigen Stirnseite 54 des Distanzrings 5 frei vorragenden Kragen bildet.

Zum Verspannen der Anordnung aus Fahrzeugradfelge 3, Zusatzradfelge 4 und Distanzring 5 dienen mehrere, wenigstens drei, in Umfangsrichtung gleichmäßig voneinander beabstandete, axial oder annähernd axial verlaufende Spannstangen 2, von denen in Figur 1 zwei sichtbar sind.

Jede Spannstange 2 besteht aus zwei Spannstangenabschnitten 21, 22, von denen jeweils der Spannstangenabschnitt 21 fahrzeugradseitig und der Spannstangenabschnitt 22 zusatzradseitig angeordnet ist. In ihren einander zugewandten Endbereichen sind die beiden Spannstangenabschnitten 21, 22 jeweils mit einem Gewindeende 21', 22' mit gegensinnig verlaufenden Gewinden ausgebildet.

Mit den Gewindeenden 21', 22' ist ein hülsenförmiges Spannschlosses 20 mit zwei gegenläufigen Innengewinden verschraubt. Durch Verdrehen des Spannschlosses 20 können die beiden Spannstangenabschnitte 21, 22 axial aufeinander zu oder voneinander weg bewegt werden.

Zum Verdrehen des Spannschlosses 20 dient jeweils eine auf diesem angebrachte Ratsche 23, die einen Betätigungshebel 24 für eine manuelle Betätigung aufweist. Der Betätigungshebel 24 kann zwischen einer in Figur 1 gezeigten Ruhestellung, in der er etwa parallel zur zugehörigen Spannstange 2 verläuft, und einer Betätigungsstellung, in der er etwa radial zur Spannstange 2 verläuft, umgesteckt oder verschwenkt werden.

An der Radscheibe 30 der Fahrzeugradfelge 3 sind in Umfangsrichtung verteilt Bohrungen 33 angebracht, in denen jeweils ein Kopfbolzen 34 befestigt ist. Jeder Kopfbolzen 34 besitzt an seiner zum Distanzring 5 und zur Zusatzradfelge 4 weisenden Seite einen Kopf 35. Jeder fahrzeugradseitige Spannstangenabschnitt 21 besitzt an seinem freien Ende ein klauenartiges Kopfstück 25, welches seitlich offen ist und mittels einer quer zur Längsrichtung des Spannstangenabschnitts 21 verlaufenden Bewegung mit dem Kopf 35 des Kopfbolzens 34 in und außer Eingriff bringbar ist. Im Eingriffszustand können vom Kopfstück 25 Zugkräfte auf den Kopf 35 übertragen werden, ohne dass das Kopfstück 25 und der Kopf 35 dadurch außer Eingriff geraten können.

Jeder zusatzradseitige Spannstangenabschnitt 22 besitzt an seinem freien Ende einen Anschlag 27. Axial innen von dem Anschlag 27 ist jeweils auf dem Spannstangenabschnitt 22 axial verschiebbar sowie in begrenztem Maße verschwenkbar ein hakenförmiges Endstück 26 angeordnet, welches in und außer Eingriff mit dem Spannring 6 bringbar ist. Im Eingriffszustand des Endstücks 26 mit dem Spannring 6 können Zugkräfte vom Endstück 26 auf den Spannring 6 übertragen werden.

In dem in Figur 1 gezeigten Zustand sind die Spannstangen 2 mittels ihres jeweiligen Spannschlosses 20 unter Zugspannung gesetzt, wodurch die Einheit aus Zusatzradfelge 4 und Distanzring 5 einerseits und die Fahrzeugradfelge 3 andererseits in Axialrichtung und Umfangsrichtung ausreichend fixiert sowie gegeneinander zentriert miteinander verbunden sind. Die zum Spannen der Spannstangen 2 nötigen Kräfte können über die Ratschen 23 mit ihren Betätigungshebeln 24 leicht manuell aufgebracht werden, was eine einfache Bedienung der Vorrichtung 1 gewährleistet.

Zum Lösen der Zusatzradfelge 4 von der Fahrzeugradfelge 3 können durch Verdrehen der Spannschlösser 20 in Löserichtung die Spannstangen 2 entspannt und dann von den Kopfbolzen 34 und dem Spannring 6 abgenommen werden.

Zum Anbauen der Zusatzradfelge 4 an die Fahrzeugradfelge 3 wird die Zusatzradfelge 4 vor der Fahrzeugradfelge 3 möglichst konzentrisch angeordnet. Dann werden die Spannstangen 2 in ihrem entspannten Zustand mittels ihres jeweiligen Kopfstücks 25 und ihres jeweiligen Endstücks 26 zunächst so mit den Kopfbolzen 34 an der fahrzeugradfelge 3 und mit dem Spannring 6 an der Zusatzradfelge 4 verbunden, dass ein ausreichender provisorischer Halt gegeben ist und ein selbsttätiges Lösen und Herabfallen der Spannstangen 2 nicht auftritt. Anschließend werden die Spannstangen 2 durch Verdrehen ihrer Spannschlösser 20 in ihre Spannstellung überführt.

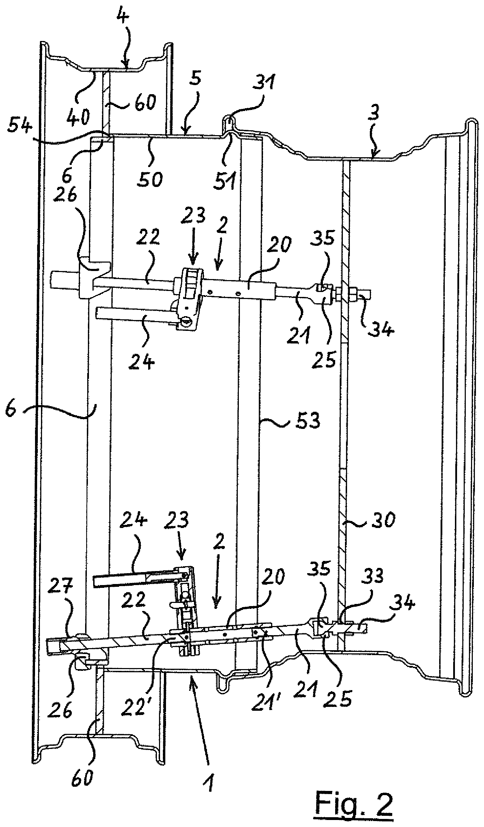

Figur 2 zeigt die eine Fahrzeugradfelge 3 und eine im Durchmesser größere Zusatzradfelge 4 miteinander verbindende Vorrichtung 1, in einer zweiten Ausführung, im Vertikalschnitt. Die Fahrzeugradfelge 3, die in Figur 2 gezeigt ist, entspricht der Fahrzeugradfelge 3 aus Figur 1. Die Zusatzradfelge 4 ist bei dem Beispiel nach Figur 2 im Vergleich zur Fahrzeugradfelge 3 im Durchmesser größer und in der Breite kleiner. Eine solche Zusatzradfelge 4 dient insbesondere zur Aufnahme eines Niederdruckreifens, der sich bei Belastung soweit flachdrückt, dass die Durchmesser der Bereifungen auf der Fahrzeugradfelge 3 und auf der Zusatzradfelge 4 im Endeffekt im Wesentlichen gleich sind.

Aufgrund der unterschiedlichen Durchmesser der Felgen 3, 4 unterscheiden sich auch deren Innendurchmesser, so dass ein unmittelbares Ansetzen des auch hier im Wesentlichen hohlzylindrischen Distanzrings 5 an den Innenumfang 40 der Zusatzradfelge 4 nicht möglich ist. Zur Überbrückung dieses Durchmesserunterschiedes ist deshalb hier am Innenumfang 40 der Zusatzradfelge 4 ein in einer radialen Ebene liegender Überbrückungsring 60 angebracht, zweckmäßig angeschweißt. Mit dem Innenumfang des Überbrückungsrings 60 sind die zur Zusatzradfelge 4 weisende Stirnseite 54 des Distanzrings 5 und der Spannring 6 verbunden, auch hier jeweils zweckmäßig verschweißt. An seiner axial nach außen, das heißt gemäß Figur 2 nach links, weisenden Seite bildet der Spannring 6 auch hier einen axial vorragenden Kragen.

Der Distanzring 5 besitzt hier ebenfalls nahe seiner fahrzeugradseitigen Stirnseite 53 den umlaufenden, nach außen gewölbten Wulst 51, der positionierend und zentrierend mit der radial nach innen hin offenen, nutförmige Kontur 31, die an der zur Zusatzradfelge 4 weisenden Seite der Fahrzeugradfelge 3 vorhanden ist, zusammenwirkt.

Zum Verbinden der Zusatzradfelge 4 und des Distanzrings 5 mit der Fahrzeugradfelge 3 dienen auch hier wieder mehrere Spannstangen 2, die einerseits mit Kopfbolzen 34 in der Radscheibe 30 der Fahrzeugradfelge 3 und andererseits mit dem Spannring 6 in Eingriff stehen. Die Spannstangen 2 in Figur 2 entsprechenden der in Figur 1 beschriebenen Ausführung, auf deren Beschreibung diesbezüglich verwiesen wird.

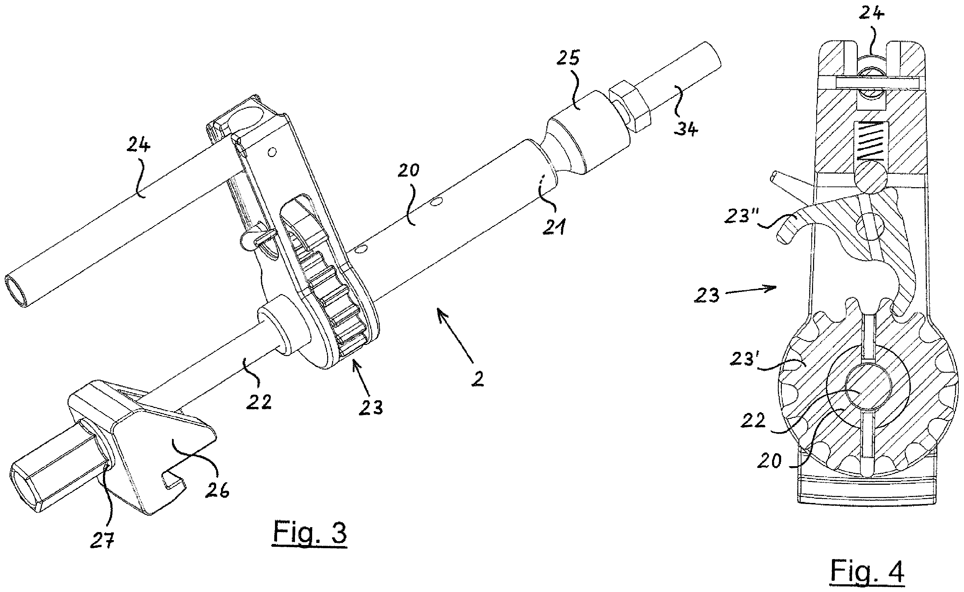

Figur 3 zeigt eine Spannstange 2 mit einer Ratsche 23 als Teil der Vorrichtung 1 aus Figur 1 und Figur 2, in Ansicht. Rechts in Figur 3 liegt der hier größtenteils innerhalb des Spannschlosses 20 befindliche fahrzeugradseitige Spannstangenabschnitt 21, an dessen freiem Ende das Kopfstück 25 angeordnet ist, welches mit dem in Figur 3 zusätzlich dargestellten Kopfbolzen 34 in und außer Eingriff bringbar ist.

Links in Figur 3 ist ein Teil des zusatzradseitigen Spannstangenabschnitts 22 sichtbar, von dem ebenfalls ein Teil innerhalb des Spannschlosses 20 liegt. Am freien Ende des Spannstangenabschnitts 22 ist der Anschlag 27 angeordnet, an dem hier das axial verschieblich sowie begrenzt verschwenkbar auf dem Spannstangenabschnitt 22 geführte hakenförmige Endstück 26 anliegt.

Mit dem Spannschloss 20 ist die Ratsche 23 verbunden, die an ihrem radial äußeren Ende den Betätigungshebel 24 trägt. In Figur 3 befindet sich der Betätigungshebel 24 in seiner Ruhestellung, in der er parallel zur Spannstange 2 verläuft. Aus dieser Ruhestellung kann der Betätigungshebel 24 in seine radial nach außen weisende Betätigungsstellung umgesteckt oder verschwenkt werden. In der Betätigungsstellung dient der Betätigungshebel 24 als Handgriff für ein manuelles Bedienen der Ratsche 2. Die Ratsche 23 ist in ihrer Arbeitsrichtung umschaltbar, um mit der Ratsche 23 das Spannschloss 20 in beiden Richtungen leicht verdrehen zu können.

Figur 4 zeigt die Ratsche 23 aus Figur 3 in einem Schnitt entlang einer zur Spannstange 2 radialen Ebene. Unten in Figur 4 liegt zentral der zusatzradseitige Spannstangenabschnitt 22 der Spannstange 2, der von dem Spannschloss 20 umgeben ist. Auf dem Spannschloss 20 ist verdrehfest ein Sperrzahnrad 23' der Ratsche 23 angebrachten, welches innerhalb der Ratsche 23 drehbar gelagert ist. Über dem Sperrzahnrad 23' liegt eine gerastete Sperrwippe 23", die wahlweise, je nach eingeschalteter Arbeitsrichtung, mit einem ersten oder einem zweiten Schenkel in Eingriff mit dem Sperrzahnrad 23' tritt. Ganz oben in Figur 4 ist noch ein Ende des Betätigungshebels 24 erkennbar.

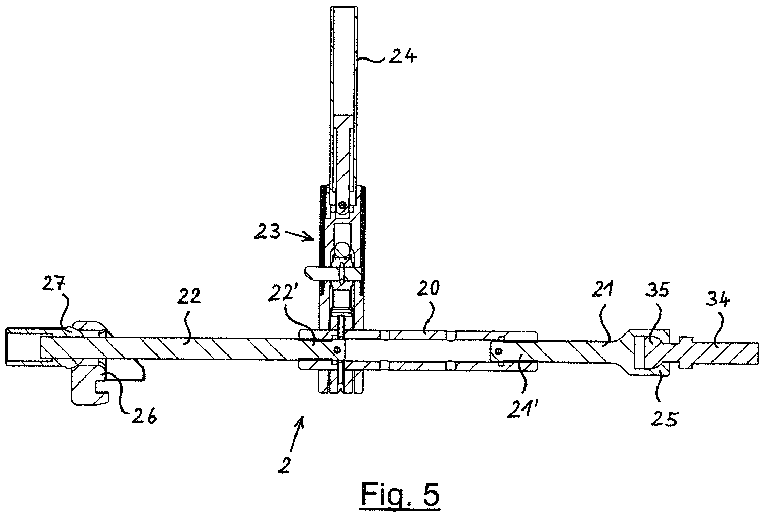

Figur 5 zeigt die Spannstange 2 aus Figur 3 in ihrer Lösestellung, im Längsschnitt.

Das Spannschloss 20 ist hier mithilfe der Ratsche 23 so weit in Löserichtung verdreht, dass sich die Spannstangenabschnitte 21, 22 in ihrem maximalen axialen Abstand voneinander befinden. In diesem Zustand der Spannstange 2 nehmen auch das Kopfstück 25 und das Endstück 26 ihren maximalen axialen Abstand voneinander ein, so dass nun die Spannstange 2 problemlos einerseits mit ihrem Kopfstück 25 in Eingriff mit dem Kopf 35 des Kopfbolzens 34 und andererseits mit ihrem Endstück 26 mit dem Spannring 6 in Eingriff gebracht werden kann.

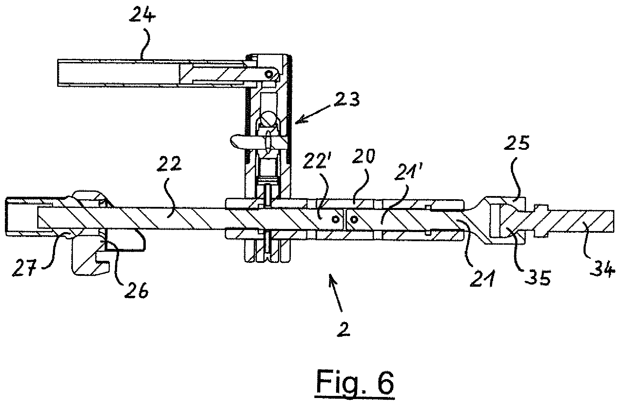

Figur 6 zeigt die Spannstange 2 aus Figur 3 in ihrer Spannstellung, im Längsschnitt. Das Spannschloss 20 ist nun mithilfe der Ratsche 23 so weit in Spannrichtung verdreht, dass die Spannstangenabschnitte 21, 22 ihren minimalen axialen Abstand voneinander aufweisen.

Wie ein Vergleich der Figuren 5 und 6 anschaulich zeigt, stellt die Spannstange 2 einen besonders großen axialen Verstellweg für die Spannstangenabschnitte 21, 22 zur Verfügung.

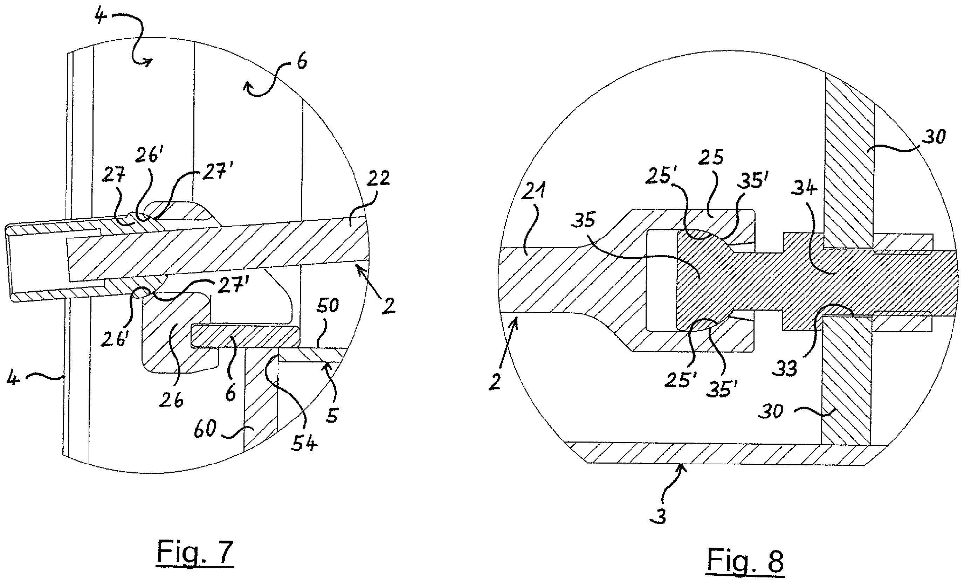

Figur 7 zeigt einen Verbindungsbereich zwischen Spannstange 2 und Distanzring 5, als vergrößertes Detail aus der Figur 2, im Vertikalschnitt. Von der Spannstange 2 ist hier deren zusatzradseitiger Spannstangenabschnitt 22 sichtbar, auf dem das hakenförmige Endstück 26 sitzt. Am freien Ende des Spannstangenabschnitts 22 ist der Anschlag 27 fest angebracht. Das hakenförmige Endstück 26 steht in Eingriff mit dem Spannring 6, der seinerseits mit dem Überbrückungsring 60 und mit der zusatzradseitigen Stirnseite 54 des Distanzrings 5 verbunden, wie verschweißt, ist.

Wie anhand der vergrößerten Darstellung in Figur 7 zu erkennen ist, sind die in dem hier gezeigten Spannzustand aneinander anliegenden Flächen 26', 27' des Endstücks 26 und des Anschlags 27 gegengleich kalottenförmig, also als Teilflächen von Kugeloberflächen, ausgebildet. Dies schafft die Möglichkeit, die Spannstange 2 relativ zu dem Endstück 26 unter Erhalt der gegenseitigen flächigen Anlage in einem gewissen Raumwinkelbereich zu verschwenken, ohne dass dabei die Kraftübertragung zwischen Spannstange 2 und Endstück 26 beeinträchtigt wird.

Figur 8 schließlich zeigt einen Verbindungsbereich zwischen Spannstange 2 und Fahrzeugradfelge 3, als vergrößertes Detail der Figur 2, im Vertikalschnitt. Rechts in Figur 8 ist ein Teil der Radscheibe 30 der Fahrzeugradfelge 3 sichtbar. In der Radscheibe 30 ist eine der Bohrungen 33 sichtbar, in die einer der Kopfbolzen 34 eingebaut ist. An seinem in Figur 8 linken Ende besitzt der Kopfbolzen 34 den Kopf 35.

Links in Figur 8 ist ein kleiner Teil des fahrzeugradseitigen Spannstangenabschnitts 21 der Spannstange 2 mit dem Kopfstück 25 sichtbar, welches mit dem Kopf 35 des Kopfbolzens 34 in Eingriff steht. Auch hier sind die im gezeigten Spannzustand aneinander anliegenden Flächen 25', 35' von Kopfstück 25 und Kopf 35 des Kopfbolzens 34 gegengleich kalottenförmig, also als Teilflächen von Kugeloberflächen, ausgeführt. Hiermit wird die Möglichkeit geschaffen, den fahrzeugradseitigen Spannstangenabschnitt 21 unter Erhalt der flächigen gegenseitigen Anlage in einem gewissen Raumwinkelbereich relativ zu dem Kopf 35 des Kopfbolzens 34 zu verschwenken.

Gemeinsam bieten die gelenkigen Verbindungen zwischen der Spannstange 2 einerseits und dem Kopf 35 sowie dem Endstück 26 andererseits die Möglichkeit, die Spannstange 2 auch mit einem Verlauf anzuordnen, der in einem gewissen Maße von einer zu der Längsmittelachse oder Drehachse von Fahrzeugradfelge 3 und Zusatzradfelge 4 parallelen Richtung abweicht. Dies erleichtert insbesondere das Verbinden von Felgen 3, 4 unterschiedlicher Durchmesser.

**Bezugszeichenliste:**

| Zeichen | Bezeichnung |
|---|---|
| 1 | Vorrichtung |
| | |
| 2 | Spannstange |
| 20 | Spannschloss |
| 21 | Spannstangenabschnitt (fahrzeugradseitig) |
| 21' | Gewindeende an 21 |
| 22 | Spannstangenabschnitt (zusatzradseitig) |
| 22' | Gewindeende an 22 |
| 23 | Ratsche an 20 |
| 23' | Sperrzahnrad |
| 23" | gerastete Sperrwippe |
| 24 | Betätigungshebel von 23 |
| 25 | Kopfstück an 21 |
| 25' | Kontaktfläche an 25 |
| 26 | Endstück an 22 |
| 26' | Kontaktfläche an 26 |
| 27 | Anschlag an 22 für 26 |
| 27' | Kontaktfläche an 27 |
| | |
| 3 | Fahrzeugradfelge |
| 30 | Radscheibe |
| 31 | nutförmige Kontur in 3 |
| 33 | Bohrungen in 30 für 34 |
| 34 | Kopfbolzen |
| 35 | Kopf von 34 |
| 35' | Kontaktfläche an 35 |
| | |
| 4 | Zusatzradfelge |
| 40 | Innenumfang von 4 |
| 5 | Distanzring |
| 50 | Innenumfang von 5 |
| 51 | Wulst an 5 |
| 53 | fahrzeugradseitige Stirnseite von 5 |
| 54 | zusatzradseitige Stirnseite von 5 |
| | |
| 6 | Spannring |
| 60 | Überbrückungsring |

## Patentansprüche

1. Vorrichtung (1) zum lösbaren Verbinden einer Zusatzradfelge (4) mit einer Fahrzeugradfelge (3), insbesondere eines landwirtschaftlichen Fahrzeuges, wie Schlepper, wobei die Vorrichtung (1) einen Distanzring (5) und mehrere Spannstangen (2) aufweist, wobei die beiden Felgen (3, 4) unter Zwischenlage des Distanzrings (5) mittels der in Umfangsrichtung der Felgen (3, 4) verteilt angeordneten Spannstangen (2) konzentrisch zueinander lösbar miteinander verbindbar sind, wobei die Spannstangen (2) an ihrem fahrzeugradseitigen Ende jeweils mit einem an der Fahrzeugradfelge (3) angeordneten Verbindungsmittel und an ihrem zusatzradseitigen Ende mit einem an der Zusatzradfelge (4) oder an dem Distanzring (5) angeordneten Haltemittel in lösbaren Eingriff bringbar sind, wobei jede Spannstange (2) mittels je einer Spanneinrichtung zum Verbinden der Felgen (3, 4) unter Zugspannung setzbar und zum Trennen der Felgen (3, 4) entspannbar ist und wobei die Spannstangen (2) jeweils in Form von zwei Spannstangenabschnitten (21, 22) mit gegenläufigen Gewindeenden (21', 22') und mit einem zwischen den Spannstangenabschnitten (21, 22) angeordneten verdrehbaren Spannschloss (20) als Spanneinrichtung ausgebildet sind,
**dadurch gekennzeichnet,**
**dass** jedes Spannschloss (20) mit einer handbetätigbaren Ratsche (23) zum Verdrehen des Spannschlosses (20) ausgeführt ist.

2. Vorrichtung nach Anspruch 1, **dadurch gekennzeichnet, dass** jede Ratsche (23) in ihrer Arbeitsrichtung umschaltbar ist.

3. Vorrichtung nach Anspruch 1 oder 2, **dadurch gekennzeichnet, dass** jede Ratsche (23) einen zwischen einer zur zugehörigen Spannstange (2) parallelen Ruhelage und einer von der zugehörigen Spannstange (2) senkrecht nach außen weisenden Betätigungslage umsteckbaren oder verschwenkbaren Betätigungshebel (24) aufweist.

4. Vorrichtung nach einem der Ansprüche 1 bis 3, **dadurch gekennzeichnet, dass** das an der Fahrzeugradfelge (3) angeordneten Verbindungsmittel durch pro Spannstange (2) je einen Kopfbolzen (34) gebildet ist und dass an dem diesem Kopfbolzen (34) zugewandten Ende jeder Spannstange (2) ein wenigstens einseitig offenes, mit einem Kopf (35) des Kopfbolzens (34) mittels einer Bewegung in Richtung quer zur Spannstangenlängsrichtung in und außer Eingriff bringbares Kopfstück (25) angebracht oder angeformt ist, in dem der Kopf (35) des Kopfbolzens (34) aufnehmbar ist.

5. Vorrichtung nach Anspruch 4, **dadurch gekennzeichnet, dass** im gespannten Zustand jeder Spannstange (2) aneinander anliegende Kontaktflächen (25', 35') von Kopfstück (25) und Kopf (35) des Kopfbolzens (34) gegengleich kalottenförmig ausgebildet sind.

6. Vorrichtung nach Anspruch 4 oder 5, **dadurch gekennzeichnet, dass** das Kopfstück (25) an jeder Spannstange (2) ein Schmiedeteil aus Stahl ist.

7. Vorrichtung nach einem der Ansprüche 1 bis 6, **dadurch gekennzeichnet, dass** das an der Zusatzradfelge (4) angeordneten Haltemittel durch einen mit der Zusatzradfelge (4) fest verbundenen oder einstückigen, konzentrisch umlaufenden Spannring (6) gebildet ist und dass an dem diesem Spannring (6) zugewandten Ende jeder Spannstange (2) ein mit dem Spannring (6) in und außer Eingriff bringbares hakenförmiges Endstück (26) angeordnet ist.

8. Vorrichtung nach einem der Ansprüche 1 bis 6, **dadurch gekennzeichnet, dass** der Distanzring (5) fest mit der Zusatzradfelge (4) verbunden ist, dass das an dem Distanzring (5) angeordneten Haltemittel durch einen mit dem Distanzring (5) fest verbundenen oder einstückigen, konzentrisch umlaufenden Spannring (6) gebildet ist und dass an dem diesem Spannring (6) zugewandten Ende jeder Spannstange (2) ein mit dem Spannring (6) in und außer Eingriff bringbares hakenförmiges Endstück (26) angeordnet ist.

9. Vorrichtung nach Anspruch 7 oder 8, **dadurch gekennzeichnet, dass** das hakenförmige Endstück (26) jeweils axial beweglich und begrenzt verschwenkbar auf die zugehörige Spannstange (2) aufgesetzt ist, dass jede Spannstange (2) an ihrem dem Endstück (26) zugeordneten Ende einen Anschlag (27) für das zugehörige Endstück (26) aufweist und dass im gespannten Zustand jeder Spannstange (2) aneinander anliegende Kontaktflächen (26', 27') von Endstück (26) und Anschlag (27) gegengleich kalottenförmig ausgebildet sind.

10. Vorrichtung nach Anspruche 9, **dadurch gekennzeichnet, dass** das Endstück (26) an jeder Spannstange (2) ein Schmiedeteil aus Stahl ist.

11. Vorrichtung nach einem der Ansprüche 1 bis 10, **dadurch gekennzeichnet, dass** der Distanzring (5) in seinem der Fahrzeugradfelge (3) zugewandten Randbereich einen radial nach außen vorragenden Wulst (51) mit einer solchen Formgebung und Bemaßung aufweist, dass der Wulst (51) in eine nach radial innen hin offene, nutförmige Kontur (31) am axial äußeren Rand der Fahrzeugradfelge (3) zentrierend einrastbar ist.

12. Vorrichtung nach einem der Ansprüche 1 bis 11, **dadurch gekennzeichnet, dass** die Zusatzradfelge (4) einen mit dem Außendurchmesser der Fahrzeugradfelge (3) übereinstimmenden Außendurchmesser aufweist, dass der Distanzring (5) fest mit der Zusatzradfelge (4) verbunden ist und dass der Spannring (6) unmittelbar mit dem Innenumfang (40) der Zusatzradfelge (4) oder dem Innenumfang (50) des Distanzrings (5) fest verbunden ist.

13. Vorrichtung nach einem der Ansprüche 1 bis 11, **dadurch gekennzeichnet, dass** die Zusatzradfelge (4) einen den Außendurchmesser der Fahrzeugradfelge (3) übersteigenden Außendurchmesser aufweist, dass der Spannring (6) mittels eines in einer radialen Ebene liegenden Überbrückungsrings (60) mit dem Innenumfang (40) der Zusatzradfelge (4) fest verbunden ist und dass der Distanzring (5) fest mit dem Spannring (6) und/oder dem Überbrückungsring (60) verbunden ist.

## Claims

1. Device (1) for the detachable connection of an additional wheel rim (4) to a vehicle wheel rim (3), particularly that of an agricultural vehicle such as a tractor, wherein the device (1) comprises a spacer ring (5) and several tie rods (2); wherein the two wheel rims (3, 4), with the spacer ring (5) in between, are detachably connectable concentrically to one another by means of the tie rods (2) distributed circumferentially relative to the rims (3, 4); wherein the tie rods (2) are detachably engageable at their vehicleside end with respective retaining means on the vehicle wheel rim (3) and at their additional-wheel-side end with retaining means arranged on the additional wheel rim (4) or on the spacer ring (5); wherein each tie rod (2) can be subjected to tensile stress by one tensioning device each to connect the rims (3, 4) and can be relaxed to separate the rims (3, 4); and wherein each tie rod (2) is in the form of two tie rod sections (21, 22) with counter-rotating thread ends (21', 22') and with a rotatable turnbuckle (20) serving as the tensioning device arranged between the tie rod sections (21, 22),
**characterized in that**
each turnbuckle (20) is provided with a manually operable ratchet (23) to turn the turnbuckle (20).

2. The device according to claim 1, **characterized in that** each ratchet (23) is capable of reversing its working direction.

3. The device according to claim 1 or 2, **characterized in that** each ratchet (23) has an actuating lever (24) that can be reinserted or pivoted between an idle position parallel with the associated tie rod (2) and an actuating position pointing perpendicularly to the outside.

4. The device according to one of claims 1 to 3, **characterized in that** the connecting means arranged on the vehicle wheel rim (3) are formed by one head bolt (34) per tie rod (2) and that a head piece (25) is affixed to or integral with the end of each tie rod (2) which faces this head bolt (34), with said head piece (25) being open at least on one side, capable of engaging with or disengaging from a head (35) of the head bolt (34) by a movement transverse to the longitudinal direction of the tie rod, and accommodating the head (35) of the head bolt (34).

5. The device according to claim 4, **characterized in that** in the tensed state of each tie rod (2), mutually abutting contact surfaces (25', 35') of the head piece (25) and the head (35) of the head bolt (34) are in an opposing calotte-shaped configuration.

6. The device according to claim 4 or 5, **characterized in that** the head piece (25) on each tie rod (2) is a forged steel part.

7. The device according to one of claims 1 to 6, **characterized in that** retaining means arranged on the additional wheel rim (4) are provided in the form of a concentric clamping ring (6) tightly fixed to or integral with the additional wheel rim (4) and that a hook-like end piece (26) capable of being engaged with or disengaged from the clamping ring (6) is arranged on that end of each tie rod (2) which faces this clamping ring (6).

8. The device according to one of claims 1 to 6, **characterized in that** the spacer ring (5) is tightly fixed to the additional wheel rim (4); that the retaining means arranged on the spacer ring (5) are formed by a concentric clamping ring (6) tightly fixed to or integral with the spacer ring (5); and that a hook-like end piece (26) capable of being engaged with or disengaged from the clamping ring (6) is arranged on that end of each tie rod (2) which faces this clamping ring (6).

9. The device according to claim 7 or 8, **characterized in that** each hook-like end piece (26) is inserted over the respective tie rod (2) so as to be axially movable and to a limited extent pivotal; that each tie rod (2) has a stop (27) for its respective end piece (26) on its end associated with the end piece (26); and that in the tensed state of each tie rod (2) mutually abutting contact surfaces (26', 27') of the end piece (26) and the stop (27) are in an opposing calotte-shaped configuration.

10. The device according to claim 9, **characterized in that** the end piece (26) on each tie rod (2) is a forged steel part.

11. The device according to one of claims 1 to 10, **characterized in that** the spacer ring (5) has a radially outwardly projecting bead (51) in its peripheral area facing the vehicle wheel rim (3), the bead being shaped and dimensioned so as to snap into a radially inwardly open groove-shaped contour (31) on the outer axial edge of the vehicle wheel rim (3).

12. The device according to one of claims 1 to 11, **characterized in that** the additional wheel rim (4) has an outer diameter corresponding with the outer diameter of the vehicle wheel rim (3); that the spacer ring (5) is tightly fixed to the additional wheel rim (4); and that the clamping ring (6) is affixed directly to the inner circumference (40) of the additional wheel rim (4) or the inner circumference (50) of the spacer ring (5).

13. The device according to one of claims 1 to 11, **characterized in that** the additional wheel rim (4) has an outer diameter exceeding that of the vehicle wheel rim (3); that the clamping ring (6) is tightly fixed to the inner circumference (40) of the additional wheel rim (4) by a bridge ring (60) lying in a radial plane; and that the spacer ring (5) is affixed to the clamping ring (6) and/or to the bridge ring (60).

## Revendications

1. Dispositif (1) de liaison détachable d'une jante supplémentaire (4) à une jante de véhicule (3), notamment d'un véhicule agricole tel qu'un tracteur, ledit dispositif (1) présentant une rondelle d'écartement (5) et plusieurs tiges de tension (2), lesdites deux jantes (3, 4) pouvant être reliées l'une à l'autre de manière concentrique l'une par rapport à l'autre, de manière détachable, en intercalant ladite rondelle d'écartement (5), au moyen des tiges de tension (2) qui sont agencées réparties dans le sens de la circonférence des jantes (3, 4), lesdites tiges de tension (2) pouvant venir en prise détachable, en leur extrémité du côté de la roue du véhicule, respectivement avec un moyen de liaison agencé au niveau de la jante de véhicule (3), et en leur extrémité du côté de la jante supplémentaire, avec un moyen de maintien agencé au niveau de la jante supplémentaire (4) ou de la rondelle d'écartement (5), chaque tige de tension (2) pouvant être mise sous contrainte de tension au moyen respectivement d'un dispositif tendeur pour relier les jantes (3, 4), et détendue pour séparer les jantes (3, 4), et lesdites tiges de tension (2) étant conçues chacune en tant que dispositif de serrage sous forme de deux parties de tiges de tension (21, 22) dotées d'extrémités taraudées (21', 22') de sens opposé et d'un manchon de serrage (20) rotatif agencé entre les parties de tiges de tension (21, 22),
**caractérisé en ce**
**que** chaque manchon de serrage (20) est réalisé doté d'un encliquetage (23) à commande manuelle pour faire tourner le manchon de serrage (20).

2. Dispositif selon la revendication 1, **caractérisé en ce que** le sens de travail de chaque encliquetage (23) peut être modifié.

3. Dispositif selon la revendication 1 ou 2, **caractérisé en ce que** chaque encliquetage (23) présente un levier actionneur (24) qui peut être commuté ou pivoté entre une position au repos parallèle à la tige de tension correspondante (2) et une position d'actionnement orientée verticalement vers l'extérieur à partir de la tige de tension (2) correspondante.

4. Dispositif selon l'une quelconque des revendications 1 à 3, **caractérisé en ce que** le moyen de liaison agencé au niveau de la jante de véhicule (3) est constitué par un goujon à tête (34) respectif par tige de tension (2) et qu'au niveau de l'extrémité de chaque tige de tension (2), tournée vers le goujon à tête (34), est fixée ou formée une coiffe (25) qui est ouverte au moins d'un côté et peut venir en prise avec une tête (35) du goujon à tête (34) par un mouvement dans le sens oblique par rapport au sens longitudinal de la tige de tension et en être détachée, laquelle coiffe pouvant recevoir la tête (35) du goujon à tête (34).

5. Dispositif selon la revendication 4, **caractérisé en ce qu'**en état de tension de chaque tige de tension (2), des surfaces de contact (25', 35'), qui sont adjacentes les unes aux autres, des coiffes (25) et tête (35) du goujon à tête (34) sont formées par symétrie en forme de calotte.

6. Dispositif selon la revendication 4 ou 5, **caractérisé en ce que** la coiffe (25) au niveau de chaque tige de tension (2) est une pièce matricée en acier.

7. Dispositif selon l'une quelconque des revendications 1 à 6, **caractérisé en ce que** le moyen de maintien agencé au niveau de la jante supplémentaire (4) est constitué d'un anneau de serrage (6) relié de manière fixe à la jante supplémentaire (4) ou concentrique et d'un seul tenant à celle-ci, et qu'une pièce d'extrémité (26) coudée pouvant venir en prise avec et se détacher de l'anneau de serrage (6) est agencée au niveau de l'extrémité de chaque tige de tension (2) tournée vers ledit anneau de serrage (6).

8. Dispositif selon l'une quelconque des revendications 1 à 6, **caractérisé en ce que** la rondelle d'écartement (5) est reliée de manière fixe à la jante supplémentaire (4), que le moyen de maintien agencé au niveau de la rondelle d'écartement (5) est constitué d'un anneau de serrage (6) relié de manière fixe à la rondelle d'écartement (5) ou concentrique et d'un seul tenant à celle-ci, et qu'une pièce d'extrémité (26) coudée pouvant venir en prise avec et se détacher de l'anneau de serrage (6) est agencée au niveau de l'extrémité de chaque tige de tension (2) tournée vers ledit anneau de serrage (6).

9. Dispositif selon la revendication 7 ou 8, **caractérisé en ce que** la pièce d'extrémité (26) coudée est placée respectivement de manière axialement mobile et pivotable de manière limitée sur la tige de tension (2) correspondante, que chaque tige de tension (2) présente à son extrémité associée à la pièce d'extrémité (26) une butée (27) pour la pièce d'extrémité (26) correspondante, et qu'à l'état tendu de chaque tige de tension (2), des surfaces de contact (26', 27') des pièce d'extrémité (26) et butée (27) adjacentes l'une à l'autre sont constituées par symétrie en forme de calotte.

10. Dispositif selon la revendication 9, **caractérisé en ce que** la pièce d'extrémité (26) au niveau de chaque tige de tension (2) est une pièce matricée en acier.

11. Dispositif selon l'une quelconque des revendications 1 à 10, **caractérisé en ce que** la rondelle d'écartement (5) présente, dans sa zone périphérique tournée vers la jante de véhicule (3), un bourrelet (51) en saillie radiale vers l'extérieur d'une forme et de dimensions telles que ledit bourrelet (51) peut être encliqueté avec effet centrant dans un contour (31) en forme de rainure ouverte radialement vers l'intérieur, au niveau du bord axial extérieur de la jante de véhicule (3).

12. Dispositif selon l'une quelconque des revendications 1 à 11, **caractérisé en ce que** la jante supplémentaire (4) présente un diamètre extérieur correspondant au diamètre extérieur de la jante de véhicule (3), que la rondelle d'écartement (5) est relié à la jante supplémentaire (4) de manière fixe et que l'anneau de serrage (6) est relié de manière fixe directement au périmètre intérieur (40) de la jante supplémentaire (4) ou au périmètre intérieur (50) de la rondelle d'écartement (5).

13. Dispositif selon l'une quelconque des revendications 1 à 11, **caractérisé en ce que** la jante supplémentaire (4) présente un diamètre extérieur dépassant le diamètre extérieur de la jante de véhicule (3), que l'anneau de serrage (6) est relié de manière fixe au périmètre intérieur (40) de la jante supplémentaire (4) au moyen d'un anneau pontet connecteur (60) situé dans un plan radial, et que la rondelle d'écartement (5) est reliée de manière fixe à l'anneau de serrage (6) et/ou à l'anneau pontet connecteur (60).
